# EUROPEAN PATENT APPLICATION

(11) **EP 2 276 324 A1**
(43) Date of publication of application: **19.01.2011**
(21) Application number: 10380087.6
(22) Date of filing: 28.06.2010
(51) Int. Cl.: H05B 6/10, A23G 9/00, A23G 9/22

(54) **Induction heating system for demolding food products**

(30) Priority: 17.07.2009 ES 200930472
(71) Applicant: GH Electrotermia, S.A., 46184 San Antonio de Benageber (Valencia) (ES)
(72) Inventor: Mezquida Gisbert, Miguel, 46184 San Antonio de Benageber (Valencia) (ES); Dede Garcia-Santamaria, Enrique, 46184 San Antonio de Benageber (Valencia) (ES); Jordan Martinez, Jose, 46184 San Antonio de Benageber (Valencia) (ES); Moratalla Martinez, Pedro, 46184 San Antonio de Benageber (Valencia) (ES)
(74) Representative: Ungria Lopez, Javier

(57) **Abstract**

The system is based in that the heat energy needed to be supplied in order to demould a food product from a metallic mold (3), is provided by induction coils (9) mounted on a rigid support (4) belonging to a module (1), and several of these modules (1) being mounted on a common tubular support (2), being fixed through a ball-coupling to a ring (5) and a polymeric joint (6). The induction coil (9) on each module (1) is positioned close to the surface facing the cavity of the rigid body (4) of the module (1) wherein the mold (3) containing the food product to be demolded is positioned.

## Description

### OBJECT OF THE INVENTION

The present invention, as this specification states in its title, relates to an induction heating system for demolding food products, utilizing an induction coil as heating means capable of transmitting the energy needed for demolding to the corresponding mold, without establishing physical contact between both elements.

The object of the invention is to increase the output of the corresponding production line of cold products that needs to be demolded for its utilization. The system is, for example, applied to industrial production lines of molded ice creams or any other cold food product that must be demolded and wherein the utilization of the system itself is feasible.

### BACKGROUND OF THE INVENTION

As is known, in order to demold cold products in production lines, as can be an ice cream production line, means for supplying heat are included in order to achieve the demolding.

Currently, heat supply is performed using water steam or hot water, such that the energy capable of providing the demolding is limited, with the consequent limitation of the productive output.

In addition, the application of water steam or hot water can not be evenly performed across the entire outer surface of the mold, resulting in a deformation of the product, and consequently a loss of quality thereof.

Another drawback derived from the water steam utilization for demolding is the closeness to the product freezing tunnel of the production line. Both using water steam or hot water, steam is produced, this being introduced in the freezing tunnel forming ice blocks, which reduces the energetic efficiency thereof, and increases the stop time for maintenance.

Lastly, the application of hot water or water steam implies the formation of drops, with the risk of the apparition of bacteria.

### DESCRIPTION OF THE INVENTION

The system object of the invention presents a set of particularities and innovations that allow solving these aforementioned problems.

In such sense, the system of the invention is based in that the heating required in order to demold cold or frozen food products, is supplied by magnetic induction, whereby it is required that the molds to be utilized be metallic for allowing its induction heating.

The induction heating is supplied from an induction coil to each mold. This induction coil, the geometry of which is equivalent to that of the mold to be heated, is mounted inside an injected rigid body whose lower configuration surrounds that of the mold, whereas the upper part will have coupling and mounting means for the fixation on the corresponding support of the assembly. We call this assembly module.

The system will comprise a certain number of modules for their simultaneous application to many other molds, and for achieving the demolding of the product from each one of them, the induction coils being mounted on a support constituted by a tubular element, wherein a certain number of housings are inserted to which many other elastomer joints are coupled, establishing this assembly a ball-coupling to act as an elastic trimmer for possible misalignments, for each module, intended to be coupled to the respective mold whose product is expected to be demolded. Said ball-coupling system, as just mentioned, allows having movement and absorbing the positioning deviations of the transport chain corresponding to the production line.

The described system can be complemented with an air injection nozzle formed by a suction cup made of polymeric material, which is provided for carrying out a perfect coupling between the air inlet and the mold itself, in order to ensure the expulsion of the product contained in said mold, such that air application will be performed as long as the process requires it.

The coil will be located on the side opposite to the demolding face of the food.

Approaching and/or distancing movements of the coil relative to the mold will be produced either by the module movement or by the mold movement.

Based on the referred characteristics, the advantages that the system provides can be summarized as follows:
- When performing the induction heating of the mold, supplying more energy is achieved in less time than when utilizing water steam or hot water.
- When utilizing the induction as energetic contribution for heating, a homogeneous distribution of the energy across the entire surface of the mold is achieved.
- An increase in the production yield, which can be estimated in 22% compared to the conventional heating means.

- As a consequence of reducing the heating time and of the homogeneous distribution of the energy across the entire surface of the mold, a reduction of the deformation of the product to be demolded is achieved and thus a higher quality thereof.
- The formation of water drops and the risk of bacteria are prevented, as well as the formation of ice blocks, by not using water steam or hot water for heating, thus reducing the losses in energetic contribution within the freezing tunnel and the maintenance stops.

### BRIEF DESCRIPTION OF THE DRAWINGS

In order to complement the description to be made bellow and with the object of helping to a better understanding of the characteristics of the invention, a set of drawings with the innovations of the heating system object of the invention is attached to the present specification.
Figure 1. - Shows a side elevational view of an assembly of an embodiment of the heating system with several modules.
Figure 2. - Shows a sectional view of one of the system modules, said section corresponding to the cut line A-A of the previous figure.
Figure 3. - Shows an elevational schematic detail wherein, by way of example, the coil located below the mold can be seen, in the system application for "ice lollies" demolding.

### PREFERRED EMBODIMENT OF THE INVENTION

As can be seen in the shown figures, the heating system, object of the invention, comprises a certain number of modules 1, mounted on a common support 2, which can be moved downward/ upward for coupling to many other molds 3 containing a product expected to be demolded.

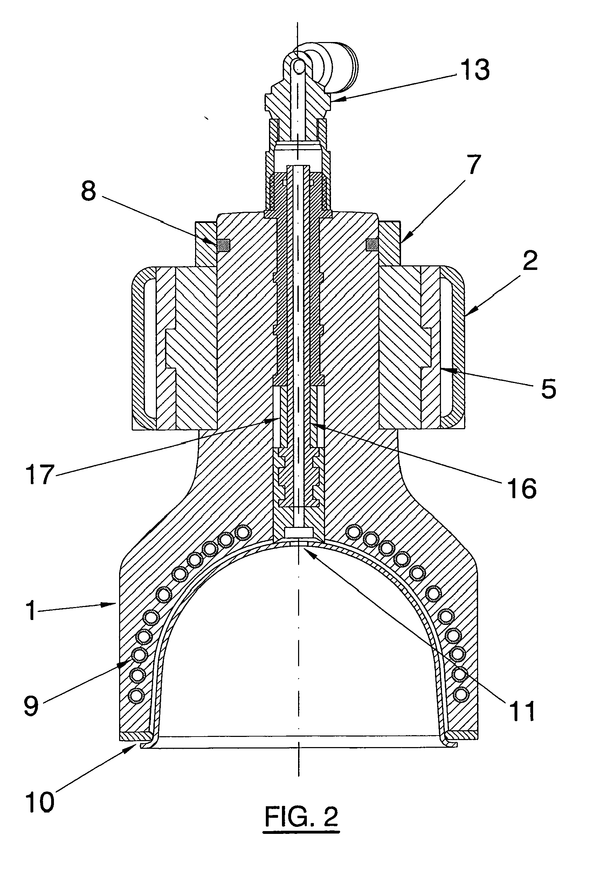

Each module 1 is constituted from an injected rigid body 4, with a lower part forming a cavity surrounding that of the mold 3, as can be seen in figure 2, wherein the referred mold 3 is metallic and semispherical in shape, although the shape can be any other depending on the desired shape of the eatable product in question.

The common support 2 is a rectangular tube wherein some metallic bushings 5 are located, said metallic bushings 5 constituting the housing of the polymeric joint 6 that allows coupling to the cylindrical part of the module 1. The fixation to the assembly of the system is performed using an upper ring 7 with the insertion of a retention fork 8.

Surrounding the cavity of the rigid body 4 of each mold 1, an induction coil 9 is mounted, such that the heating produced by this will homogenously be transmitted with total efficiency to the mold 3, without contacting it. A centering cap 10 ensures a perfect alignment between the mold 3 and the induction coil 9.

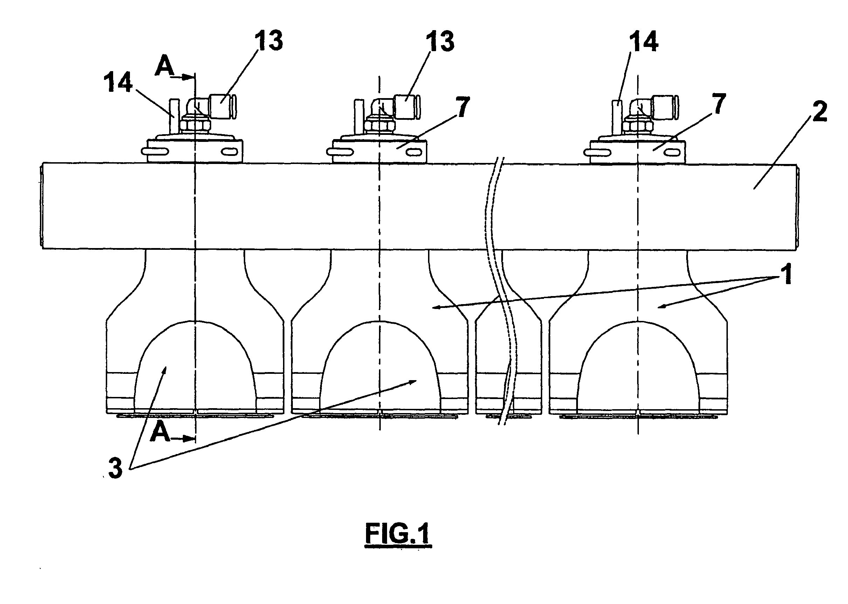

Lastly, each module can include, if the case requires, an assembly comprised by an air inlet adapter 13, an air injection nozzle 11, constituted by a suction cup made of polymeric material that allows performing a correct coupling to the mold 3 at the hole 12, a guide tube 16 and an elastomer joint 17 which function is absorbing the possible height differences between the mold 3 and the body 1. The described system contributes in demolding the eatable product housed within the mold 3. In figures 1 and 2, the tube 14 corresponds to the electrical connection of the inductor.

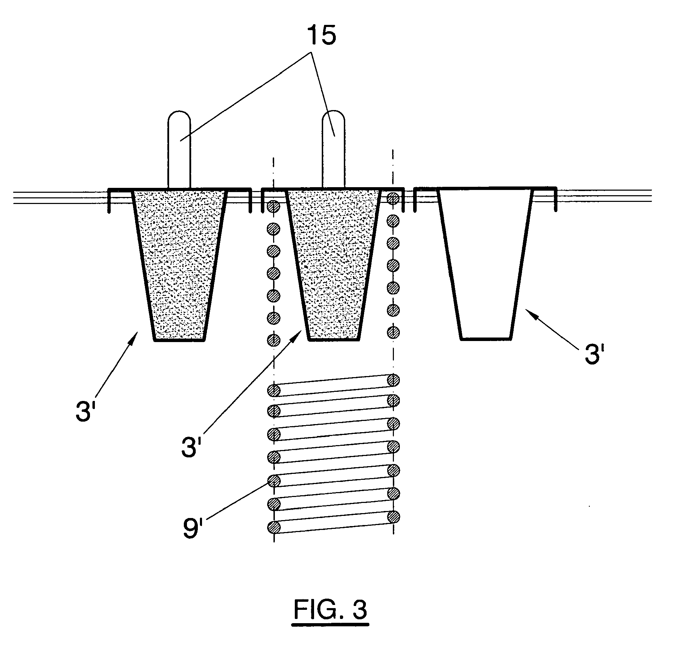

In the embodiment variant of figure 3, the molds 3' for the "ice lollies" can be seen with their corresponding grip sticks 15, in an inverted position in relation to the embodiment showed in figures 1 and 2. It can be seen that the position of the corresponding induction coil 9', in this case of figure 3, is located below.

## Claims

1. INDUCTION HEATING SYSTEM FOR DEMOLDING FOOD PRODUCTS, being provided for demolding certain products processed in metallic molds established in an industrial manufacturing line, among the products of which ice creams, ice lollies, and the like can be mentioned, **characterized in that** this system includes, at least an induction coil (9 or 9') for heating the mold or molds (3 or 3') containing the food product to be demolded, said induction coils (9 or 9') being mounted with the capacity of approaching to and/or distancing from said molds (3 or 3') for their coupling and uncoupling, or either fixed in which case the capacity of approaching and/or distancing will be of the molds.

2. INDUCTION HEATING SYSTEM FOR DEMOLDING FOOD PRODUCTS, according to claim 1, **characterized in that** the induction coil (9) is mounted on a module (1) constituted by a rigid body (4) provided with a cavity surrounding the shape of the mold (3) at its lower part, being said rigid body (4) fixed to a common support (2), at its cylindrical part, through a ball-coupling made of polymeric material (6) housed in a metallic bushing (5), which is complemented with a ring (7) for vertical retention.

3. INDUCTION HEATING SYSTEM FOR DEMOLDING FOOD PRODUCTS, according to the preceding claims, **characterized in that** an air blowing assembly contributing to demold the food product from the mold 3 is optionally included.

4. INDUCTION HEATING SYSTEM FOR DEMOLDING FOOD PRODUCTS, according to claim 3, **characterized in that** an assembly is comprised by an air inlet adapter 13, an air injection nozzle 11, constituted by a suction cup made of polymeric material that allows performing a correct coupling to the mold 3 at the hole 12, a guide tube 16, and an elastomer joint 17 whose function is absorbing the possible height differences between the mold 3 and the body 1, the described system cooperating in demolding the eatable product housed within the mold 3.

5. INDUCTION HEATING SYSTEM FOR DEMOLDING FOOD PRODUCTS, according to claim 1, **characterized in that** the geometry of the coil (9 or 9') is equivalent to and surrounds that of the mold (3 or 3') to be heated.

6. INDUCTION HEATING SYSTEM FOR DEMOLDING FOOD PRODUCTS, according to claim 1, **characterized in that** the coil (9 or 9') is mounted on the mold side opposite to the demolding face of the product.

7. INDUCTION HEATING SYSTEM FOR DEMOLDING FOOD PRODUCTS, according to claim 1, **characterized in that** the approaching and/or distancing movements of the coil (9 or 9') are relative movements of the mold (3 or 3') in relation to the coil (9 or 9'), or from this in relation to the mold.
